# EUROPÄISCHE PATENTSCHRIFT

(11) **EP 3 381 281 B1**
(45) Veröffentlichungstag und Bekanntmachung des Hinweises auf die Patenterteilung: **21.07.2021**
(21) Anmeldenummer: 18164631.6
(22) Anmeldetag: 28.03.2018
(51) Int. Cl.: A01M 21/04, A01M 7/00

(54) **VERFAHREN UND VORRICHTUNG ZUR BEKÄMPFUNG UNERWÜNSCHTER LEBEWESEN AUF EINEM FELD**
METHOD AND DEVICE FOR CONTROLLING UNDESIRABLE ORGANISMS IN A FIELD
PROCÉDÉ ET DISPOSITIF DE LUTTE CONTRE DES ORGANISMES VIVANTS INDÉSIRABLES SUR UN CHAMP

(30) Priorität: 29.03.2017 DE 102017205293
(43) Veröffentlichungstag der Anmeldung: 03.10.2018
(73) Patentinhaber: Deere & Company, Moline, IL 61265 (US)
(72) Erfinder: Struve, Carsten, 68163 Mannheim (DE)
(74) Vertreter: Holst, Sönke

(56) Entgegenhaltungen:
- WO-A1-2012/122988
- WO-A1-2016/025848
- WO-A1-2016/090414
- DE-A1-102014 226 189
- US-A1- 2012 169 504

## Beschreibung

Die Erfindung betrifft ein Verfahren und eine Vorrichtung zur Bekämpfung unerwünschter Lebewesen auf einem Feld.

### Stand der Technik

In der Pflanzenbau betreibenden Landwirtschaft wachsen in der Regel nicht nur die auf einem Feld angebauten, gewünschten Pflanzen, sondern es siedeln sich dort auch ungewünschte Lebewesen an, bei denen es sich um Wild- oder Beikräuter (auch als Unkraut bezeichnet), Pilze oder Insekten handeln kann. Um keine allzu großen Ertragsminderungen durch die unerwünschten Lebewesen hinnehmen zu müssen, ist es gebräuchliche Praxis, Spritzmittel auszubringen, um diese unerwünschten Lebewesen zu bekämpfen. Hierzu bedient man sich einer Feldspritze, die als selbstfahrendes oder gezogenes Fahrzeug oder als Anbaugerät ausgeführt sein kann.

Aus wirtschaftlichen und Umweltschutzgründen ist es sinnvoll, das Spritzmittel nur dort auszubringen, wo es tatsächlich benötigt wird. Zur selektiven Ausbringung von Spritzmitteln sind im Stand der Technik zwei Vorgehensweisen bekannt:
Einerseits besteht die Möglichkeit, in eine elektronische Karte des Feldes die Standorte einzutragen, an denen sich unerwünschte Lebewesen befinden. Diese Karte kann bei einer vor dem Spritzvorgang durchgeführten Erkundung des Feldes erstellt werden, sei es auf manuelle Art und Weise oder mittels eines Sensors, der sich auf einem Fahrzeug oder Fluggerät befindet (vgl. z.B. U. Shapira et al., Field spectroscopy for weed detection in wheat and chickpea fields, International Journal of Remote Sensing, 2013, Vol. 34, No. 17, S. 6094-6108 oder M. Koller et al., Site-specific herbicide applications based on weed maps provide effective control, California Agriculture, Vol. 59, Nr. 3, S.182-187, wie auch US 2012/0169504 A1, wo pauschal festgelegt wird, welches Feld wann mit wieviel Mittel zu beaufschlagen ist). Die Ansteuerung der Düsen der Feldspritze erfolgt automatisch, basierend auf der Karte und der aktuellen Position der Feldspritze.

Andererseits besteht auch die Möglichkeit, die Feldspritze bzw. ein sie ziehendes oder tragendes Fahrzeug mit einem lokalen Sensor für unerwünschte Lebewesen auszustatten und diese während der Fahrt (online) zu erfassen, um die Düsen der Feldspritze im Sinne einer Beaufschlagung der erfassten, unerwünschten Lebewesen mit dem Spritzmittel anzusteuern (vgl. z.B. H. Böttger et al, Neue Technik zur variablen Spritzmitteldosierung, Landtechnik 3/2003, S. 142 - 143, WO 2012/122988 A1, DE 10 2014 226 189 A1 und WO 2016/025848 A1).

Die WO 2016/090414 A1 beschreibt ein System mit einer Wegplanung für eine Maschine zur Bekämpfung unerwünschter Lebewesen basierend auf von anderen Maschinen gewonnenen Daten, wobei die Maschine mit einem lokalen Sensor zur Erfassung der unerwünschten Lebewesen und Mitteln zu ihrer Bekämpfung ausgestattet ist. In Bereichen des Feldes, in denen nicht mit unerwünschten Lebewesen gerechnet wird, kann die Geschwindigkeit der Maschine erhöht werden.

### Aufgabe

Eine nur auf einer bereits vor einem längeren Zeitraum erzeugten Karte (die, wie in der Literatur (M. Koller et al., a.a.O.) vorgeschlagen, aus wirtschaftlichen Gründen auch schon im Vorjahr oder noch davor erzeugt worden sein kann) basierende Ansteuerung der Feldspritze unterliegt dem Nachteil, dass die aktuelle Verteilung der unerwünschten Lebewesen auf dem Feld nicht unbedingt mehr mit der Karte übereinstimmen muss. Zudem sind derartige Karten, abhängig von der gewählten Erkundungs- und Aufzeichnungstechnik, nicht immer ausreichend hochauflösend und genau, um mit hinreichender Sicherheit alle unerwünschten Lebewesen zu treffen und gleichzeitig möglichst wenig Spritzmittel zu vergeuden, indem es auf nicht betroffene Stellen des Feldes ausgebracht wird.

Die Ansteuerung der Feldspritze basierend auf dem lokalen Sensor leidet hingegen unter dem Problem, dass die Feldspritze mit einer relativ hohen Geschwindigkeit (in der Größenordnung von 10 km/h oder mehr) über das Feld bewegt werden muss, um die Arbeitskosten in einem wirtschaftlich verträglichen Rahmen zu halten. Die Reaktionszeiten des Bildverarbeitungssystems des Sensors und der Ventile der Düsen sind derzeit jedoch größer als die bei den verwendeten Geschwindigkeiten tatsächlich zwischen der optischen Erfassung des unerwünschten Lebewesens durch den Sensor und der tatsächlichen Öffnung der Düse zur Verfügung stehende Zeit, die noch kleiner wird, wenn die Sensoren nicht an der Vorderseite des Spritzfahrzeugs angebracht sind, wie bei Böttger et al. beschrieben, sondern zur Vermeidung eines zweiten Gestänges mit am Spritzgestänge montiert werden (vgl. WO 2012/122988 A1). Das hat zur Folge, dass Strecken in der Größenordnung von etwa 10 m nicht bespritzt werden können.

Die der Erfindung zu Grunde liegende Aufgabe wird darin gesehen, ein Verfahren und eine Vorrichtung zur Bekämpfung unerwünschter Lebewesen auf einem Feld sowie eine entsprechende Maschine bereitzustellen, bei welchen die erwähnten Nachteile nicht oder in vermindertem Maße auftreten.

### Lösung

Diese Aufgabe wird erfindungsgemäß durch die Lehre der Patentansprüche 1 und 7 gelöst, wobei in den weiteren Patentansprüchen Merkmale aufgeführt sind, die die Lösung in vorteilhafter Weise weiterentwickeln.

Ein Verfahren zur Bekämpfung unerwünschter Lebewesen auf einem Feld umfasst die in Anspruch 1 aufgeführten Schritte.

Mit anderen Worten wird die Karte zur vorausschauenden Ansteuerung der Maschine genutzt, während der lokale Sensor zur Ansteuerung der Ausgabeeinrichtung dient und eine Überprüfung bzw. Übersteuerung der Karte ermöglicht. Man erhält somit anhand der Karte eine vorausschauend angesteuerte Funktion der Maschine, während mögliche Fehler der Karte durch den lokalen Sensor korrigiert werden können. Auf diese Weise erreicht man, dass die Maschine an den unkritischen, voraussichtlich nicht mit unerwünschten Lebewesen besetzten Stellen des Feldes mit einer relativ hohen Geschwindigkeit fahren kann, was Zeit und Kosten einspart, und dennoch eine hohe Genauigkeit der Ausbringung des Mittels möglich wird.

Die anhand der Karte vorausschauend angesteuerte Funktion der Maschine umfasst ein selbsttätiges Öffnen der Ausgabeeinrichtung im Sinne einer Beaufschlagung eines in der Karte eingetragenen Standorts des unerwünschten Lebewesens mit dem Mittel, während der lokale Sensor ein selbsttätiges Schließen der Ausgabeeinrichtung in dem Falle bewirkt, dass der lokale Sensor am in der Karte eingetragenen Standort kein unerwünschtes Lebewesen erkennt. Die Karte dient demnach dazu, die Ausgabeeinrichtung vorausschauend genau dann zu öffnen, wenn die Ausgabeeinrichtung den erwarteten Standort eines unerwünschten Lebewesens erreicht hat. Sollte der lokale Sensor an dem Standort kein unerwünschtes Lebewesen nachweisen können, wird die Ausgabeeinrichtung wieder geschlossen. An den kritischen Stellen, an denen unerwünschte Lebewesen erwartet werden, wird somit die Ausgabeeinrichtung vorsorglich geöffnet und im Fall, dass die Karte durch den Sensor falsifiziert wird, wird die Ausgabeeinrichtung wieder geschlossen.

Zusätzlich umfasst die vorausschauend angesteuerte Funktion der Maschine ein selbsttätiges Vermindern der Vortriebsgeschwindigkeit der Maschine im Sinne eines Erzielens einer verminderten Vortriebsgeschwindigkeit am in der Karte eingetragenen Standort des unerwünschten Lebewesens, während der lokale Sensor zum dortigen Ansteuern der Ausgabeeinrichtung dient. Bei dieser Variante wird die ursprüngliche, höhere Vortriebsgeschwindigkeit der Maschine vorausschauend im geeigneten Abstand vor dem Erreichen des erwarteten Standorts der unerwünschten Lebewesens vermindert, um zu erreichen, dass die Maschine dann mit der verminderten Vortriebsgeschwindigkeit fährt, wenn sie (bzw. der lokale Sensor) den erwarteten Standort erreicht hat, um dort anhand der Signale des lokalen Sensors die Ausgabeeinrichtung ansteuern zu können. Demnach wird die Maschine an den kritischen Stellen des Feldes verlangsamt, um ihre Vortriebsgeschwindigkeit an die Reaktionszeiten des Sensors und der Ausgabeeinrichtung anpassen zu können. Man erreicht demnach trotz der hohen Geschwindigkeit der Maschine eine hohe Genauigkeit der Spritzmittelausbringung. Die Maschine fährt während des Befahrens von Bereichen des Feldes, an denen in der Karte keine unerwünschten Lebewesen eingetragen sind, mit einer ersten Vortriebsgeschwindigkeit, die größer als der Abstand zwischen dem vom lokalen Sensor sensierten Bereich und der von der Ausgabeeinrichtung beaufschlagten Stelle des Feldes geteilt durch die addierten Reaktionszeiten des lokalen Sensors und der Ausgabeeinrichtung ist. Die verminderte Vortriebsgeschwindigkeit ist kleiner oder gleich dem Abstand zwischen dem vom lokalen Sensor sensierten Bereich und der von der Ausgabeeinrichtung beaufschlagten Stelle des Feldes geteilt durch die addierten Reaktionszeiten des lokalen Sensors und der Ausgabeeinrichtung.

Die Öffnung der Ausgabeeinrichtung kann beibehalten und/oder die Vortriebsgeschwindigkeit kann erhöht werden, solange der lokale Sensor unerwünschte Lebewesen detektiert.

Die Ausgabeeinrichtung kann wieder geschlossen werden, sobald der lokale Sensor keine unerwünschte Lebewesen mehr detektiert.

Die Karte kann mit dem lokalen Sensor während einer zeitlich zurückliegenden Überfahrt der Maschine über das Feld erzeugt werden. Hier kann es sich beispielsweise um einen im vorigen Jahr erfolgen Spitzvorgang handeln. Alternativ oder zusätzlich kann die Karte mittels einer anderen Vorgehensweise, z.B. manueller Erkundung oder Überfahren oder Überfliegen des Feldes mittels eines geeigneten Roboters oder einer Drohne oder eines Satelliten erzeugt werden.

Insbesondere sind die unerwünschten Lebewesen Wildkräuter, Insekten oder Pilze und die als Feldspritze ausgeführte Maschine bringt als Mittel ein zu ihrer Bekämpfung geeignetes Spritzmittel aus. Es sind jedoch auch andere Varianten denkbar; so können die unerwünschten Lebewesen Schnecken sein, die durch Schneckenkorn bekämpft werden. Wildkräuter, Insekten oder andere Tiere können ggf. auch mechanisch oder durch Strahlen, Elektroschock o.ä. bekämpft werden, sodass als Mittel im Sinne der vorliegenden Erfindung nicht nur Chemikalien, sondern auch Hacken, Strahlen, elektrische Ströme etc. zu verstehen sind.

Der lokale Sensor kann an einem an der Vorderseite der Maschine oder eines sie ziehenden oder tragenden Fahrzeugs angebrachten Halter oder an einem die Ausgabeeinrichtung halternden Querträger (z.B. Spritzgestänge) befestigt sein. Er könnte jedoch alternativ oder zusätzlich dazu an einem Fluggerät angebracht sein, der das Feld vor der Maschine abfliegt und mit dieser drahtlos oder über ein Kabel verbunden ist (vgl. DE 10 2014 201 203 A1).

Eine Vorrichtung zur Bekämpfung unerwünschter Lebewesen auf einem Feld ist mit einer Steuerung ausgestattet, die mit einer elektronischen Karte, in welcher erwartete Standorte unerwünschter Lebewesen auf dem Feld georeferenziert eingetragen sind, einer steuerbaren Ausgabeeinrichtung einer einen Vorrat an einem Mittel zur Bekämpfung der unerwünschten Lebewesen aufweisenden Maschine zur Ausbringung des Mittels und einem lokalen Sensor zum Erfassen unerwünschter Lebewesen auf dem Feld verbunden ist. Die Steuerung ist eingerichtet, die Karte zur vorausschauenden Ansteuerung einer Funktion der Maschine zu verwenden und den lokalen Sensor zur Ansteuerung der Ausgabeeinrichtung zu nutzen.

### Ausführungsbeispiel

In den Zeichnungen ist ein nachfolgend näher beschriebenes Ausführungsbeispiel der Erfindung dargestellt. Es zeigt:
- Fig. 1: eine seitliche Ansicht einer Maschine zum Ausbringen eines Mittels mit einer zugehörigen Steuerung,
- Fig. 2: eine Draufsicht auf die Maschine,
- Fig. 3: ein Flussdiagramm, nach dem die Steuerung der Maschine im Betrieb gemäß einer ersten Ausführungsform arbeitet, und
- Fig. 4: ein Flussdiagramm, nach dem die Steuerung der Maschine im Betrieb gemäß einer zweiten Ausführungsform arbeitet.

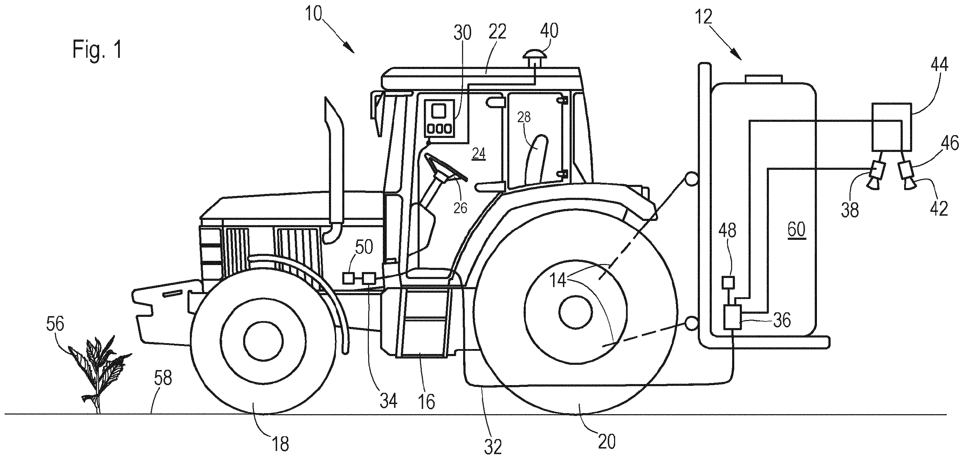

Die Figur 1 zeigt eine seitliche Ansicht einer Maschine 12 in Form einer Feldspritze, die an einem Dreipunktgestänge 14 eines landwirtschaftlichen Ackerschleppers 10 angebaut ist. Die Maschine 12 könnte auch auf den Ackerschlepper 10 oder ein anderes Fahrzeug (Geräteträger o.ä.) aufgesattelt oder durch den Ackerschlepper 10 gezogen werden, d.h. ein Fahrgestell mit Rädern und einer an einer Kupplung des Ackerschleppers 10 angehängte Deichsel umfassen, oder als selbstfahrendes Spritz-Fahrzeug ausgeführt sein. Der Ackerschlepper 10 baut sich auf einem tragenden Rahmen 16 auf, der sich auf lenkbaren Vorderrädern 18 und antreibbaren Hinterrädern 20 abstützt und eine Kabine 22 trägt, in der sich ein Bedienerarbeitsplatz 24 befindet. Der Bedienerarbeitsplatz 24 umfasst ein Lenkrad 26, einen Sitz 28, Pedale (nicht gezeigt) und eine Bedienerschnittstelle 30.

Die Bedienerschnittstelle 30, bei der es sich um ein so genanntes virtuelles Terminal handeln kann, ist mit einer Datenübertragungseinrichtung 32 verbunden, die in der dargestellten Ausführungsform ein serieller Datenbus sein kann. Mit der Datenübertragungseinrichtung 32 sind weiterhin eine Arbeitsfahrzeugsteuerung 34 des Ackerschleppers 10, eine Steuerung 36 der Maschine 12 und eine Positionsbestimmungseinrichtung 40 verbunden. Alle erwähnten Einrichtungen tauschen während des Betriebs des Ackerschleppers 10 über die Datenübertragungseinrichtung 32 Botschaften untereinander aus. In der Regel sind weitere Kontrolleinheiten (nicht gezeigt) an der Datenübertragungseinrichtung 32 angeschlossen, die zu so genannten Arbeitsensembles (englisch: Working Sets) zusammengefasst sein können, die gemeinsam mit dem virtuellen Terminal 30 und ggf. anderen Kontrolleinheiten oder Arbeitsensembles über die Datenübertragungseinrichtung 32 kommunizieren. Das hier verwendete Protokoll entspricht vorzugsweise der ISO 11783. Es wäre jedoch auch möglich, die erwähnten Einrichtungen direkt untereinander zu verkabeln und/oder ein beliebiges anderes Protokoll zu verwenden.

Die Positionsbestimmungseinrichtung 40 empfängt Signale von Satelliten und ggf. erdgebundenen Sendern und ermittelt daraus die aktuelle Position des Ackerschleppers 10 in zumindest zwei horizontalen Dimensionen und vorzugsweise auch dessen Geschwindigkeit und Fahrtrichtung. Diese Daten werden über die Datenübertragungseinrichtung 32 u.a. an das virtuelle Terminal 30 und an die Steuerung 36 übertragen.

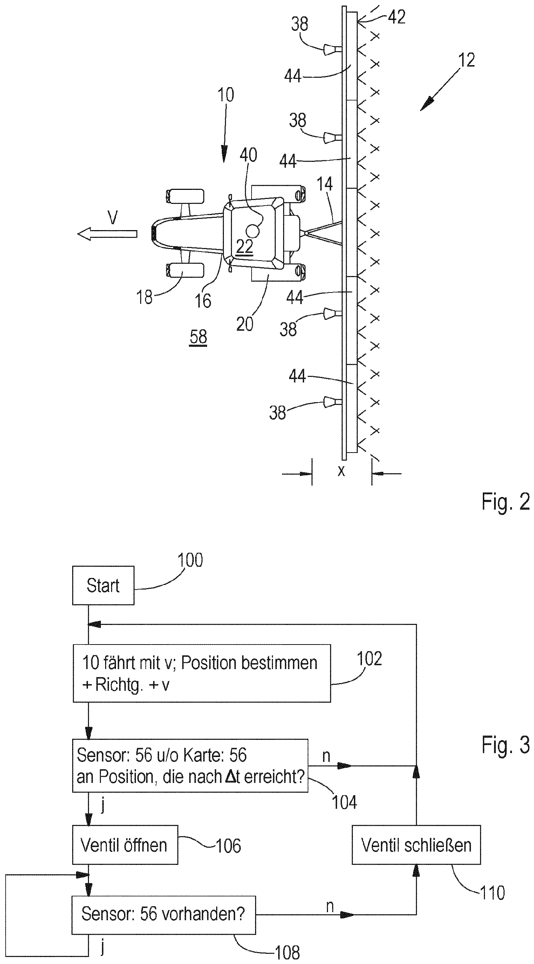

Weiterhin ist eine Reihe an lokalen Sensoren 38 (vgl. auch Figur 2) direkt oder über die Datenübertragungseinrichtung 32 mit der Steuerung 36 verbunden. Die lokalen Sensoren 38 sind, über die Arbeitsbreite der Maschine 12 verteilt, an einem Querträger 44 der Maschine 12 angebracht und blicken von dort nach vorn Die lokalen Sensoren 38 umfassen jeweils eine Kamera mit einem Bildsensor und einen Prozessor, auf dem eine Bildverarbeitungssoftware läuft, die es ermöglicht, anhand der Signale des Bildsensors auf einem Feld 58 stehende, unerwünschte Lebewesen 56 zu erkennen, bei dem es sich im gezeigten Beispiel um eine Wildpflanze handelt, die auf dem Feld 58 nicht angebaut wird. Die lokalen Sensoren 38 können somit der Steuerung 36 Daten übersenden, ob und ggf. an welcher Stelle im von ihnen erfassten Bild ein unerwünschtes Lebewesen 56 erkennbar ist.

Die Arbeitsfahrzeugsteuerung 34 des Ackerschleppers 10 ist mit einer Geschwindigkeitskontrolleinheit 50 verbunden, welche die Vortriebsgeschwindigkeit des Ackerschleppers 10 vorgibt, indem sie beispielsweise die Drehzahl eines Antriebsmotors des Ackerschleppers 10 und/oder das Übersetzungsverhältnis eines den Antriebsmotor mit den Rädern 20 und ggf. 18 trieblich verbindenden Getriebes kontrolliert. Die Lenkung des Ackerschleppers 10 erfolgt durch den Bediener mittels des Lenkrads 26 oder durch eine selbsttätige Lenksteuerung, die den Ackerschlepper 10 anhand eines geplanten Weges über das Feld 58 führt, insbesondere anhand vorhandener Fahrgassen.

Die Steuerung 36 ist über die Datenübertragungseinrichtung 32 oder eine separate Verbindung mit Aktoren 46 verbunden, welche jeweils einer (in der Regel als Düse ausgeführten) Ausgabeeinrichtung 42 der Maschine 12 zugeordnet sind und die Rate kontrollieren, mit welcher die Ausgabeeinrichtung 42 Spritzmittel aus einem Vorratsbehälter 60 auf das Feld abgibt. Die Ausgabeeinrichtungen 42 sind an der Maschine 12 über den zur Straßenfahrt einfaltbaren Querträger 44 befestigt, der auch die lokalen Sensoren 38 trägt.

Die Steuerung 36 ist schließlich mit einer Speichereinrichtung 48 verbunden, in welcher zuvor ermittelte Standorte von unerwünschten Lebewesen 56 in einer Karte georeferenziert eingetragen wurden. Die Karte kann bei einer vorigen Überfahrt der Maschine 12 über das Feld 58 mittels der Signale der lokalen Sensoren 38 erzeugt worden sein. Die Aufgaben der Steuerung 36 könnten auch durch eine beliebige andere Steuerung übernommen werden, z.B. durch eine Kontrolleinheit im virtuellen Terminal 30. Das virtuelle Terminal 30 kann dazu dienen, mittels der Steuerung 36 dem Bediener eine Karte des Feldes und die Positionen erwarteter, unerwünschter Lebewesen 56 anzuzeigen, wozu auf die Signale der Positionsbestimmungseinrichtung 40 und die Speichereinrichtung 48 zurückgegriffen werden kann.

Während des Arbeitsbetriebs der Maschine 12 und des Ackerschleppers 10 geht die Steuerung 36 nach dem in der Figur 3 gezeigten Flussdiagramm vor. Nach dem Start im Schritt 100 wird im Schritt 102 der Ackerschlepper 10 und somit auch die Maschine 12 mit einer ersten Vortriebsgeschwindigkeit v über das Feld 58 bewegt. Die erste Geschwindigkeit v kann durch die Steuerung 36 vorgegeben und über die Arbeitsfahrzeugsteuerung 34 an die Geschwindigkeitskontrolleinheit 50 kommandiert werden, oder sie wird vom Bediener über ein Pedal oder einen Fahrhebel vorgegeben. Außerdem wird im Schritt 102 anhand der Signale der Positionsbestimmungseinrichtung 40 die aktuelle Position des Ackerschleppers 10 ermittelt. Zudem wird dessen Vortriebsgeschwindigkeit v ermittelt, wozu man auf die Signale der Positionsbestimmungseinrichtung 40 oder eines mit einem der Räder 18, 20 zusammenwirkenden (Radar-) Sensors oder eines mit dem Erdboden zusammenwirkenden Sensors oder eines Trägheitsnavigationssystems zurückgreifen kann. Auch die Fahrtrichtung des Ackerschleppers 10 wird ermittelt, anhand eines Lenkwinkelsensors und/oder eines Trägheitsnavigationssystems und/oder anhand der Signale der Positionsbestimmungseinrichtung 40.

Anhand der im Schritt 102 ermittelten Daten wird im Schritt 104 ermittelt, wo sich der Ackerschlepper 10 (bzw. die Ausgabeeinrichtungen 42 der Maschine 12) nach Ablauf einer Zeit Δt befinden wird (oder werden). Diese Zeit Δt entspricht der Reaktionszeit der Aktoren 46. Bei der Reaktionszeit der Aktoren 46 ist einerseits deren mechanische Reaktionszeit zu berücksichtigen, andererseits aber auch die Zeit, die zum Erreichen einer hinreichenden Qualität des Spritznebels erforderlich ist. Sollte die Reaktionszeit der Geschwindigkeitskontrolleinheit 50 größer als die erwähnte Reaktionszeit der Aktoren sein, kann Δt der Reaktionszeit der Geschwindigkeitskontrolleinheit 50 entsprechen. Es wird demnach vorausschauend für die Standorte des Feldes 58, den die Ausgabeeinrichtungen 42 nach Ablauf der Reaktionszeit Δt erreicht haben werden, anhand der Karte in der Speichereinrichtung 48 überprüft, ob sich an einer dieser Standorte gemäß den in der Karte abgelegten Informationen unerwünschte Lebewesen 56 befinden. Um die kartierten Standorte der unerwünschten Lebewesen 56 kann noch eine Sicherheitszone gelegt werden, deren Radius einige Meter betragen kann. Sind am Standort keine unerwünschten Lebewesen zu erwarten, folgt wieder der Schritt 102, anderenfalls der Schritt 106.

Es werden im Schritt 104 auch die Signale der lokalen Sensoren 38 kontinuierlich durch die Steuerung 36 überwacht, da auch an Standorten auf dem Feld 58, die nicht in der Karte in der Speichereinrichtung 48 eingetragen sind, unerwünschte Lebewesen 56 vorhanden sein können. Sollte einer der Sensoren 38 ein derartiges Lebewesen 56 an einer unerwarteten Stelle auffinden, folgt ebenfalls der Schritt 106 und anderenfalls der Schritt 102.

Im Schritt 106 veranlasst die Steuerung 36, dass alle Aktoren 46 mit einem (gemäß der Daten in der Karte in der Speichereinrichtung 48) im Wirkbereich der dem jeweiligen Aktor 46 zugehörigen Ausgabeeinrichtung 42 liegenden, unerwünschten Lebewesen 56 durch die Steuerung 36 angewiesen werden, mit dem Ausbringen von Spritzmittel zu beginnen.

Es folgt der Schritt 108, in dem die Steuerung 36 die Signale der lokalen Sensoren 38 dahingehend untersucht, ob unerwünschte Lebewesen 56 erfasst wurden. Der Schritt 108 findet, zeitlich betrachtet, genau dann oder kurz danach statt, nachdem die Zeit Δt abgelaufen ist, um sicherzustellen, dass die Sensoren 38 genau die Position des Feldes 58 erfassen, die (im Schritt 104) in der Karte der Speichereinrichtung 48 eingetragen war. Die Steuerung 36 überprüft demnach anhand der Sensoren 38, ob die Karte korrekt war oder nicht. Im erstgenannten Fall folgt wieder der Schritt 108 (solange, bis keiner der Sensoren 38 mehr ein unerwünschtes Lebewesen 56 sieht) und im zweiten Fall der Schritt 110, in dem die Steuerung 36 die Aktoren 46 wieder zum Schließen anweist.

Die mittels der lokalen Sensoren 38 im Schritt 108 erfassten, unerwünschten Lebewesen 56 können georeferenziert in einer neuen Karte in der Speichereinrichtung 48 eingetragen werden, die bei einem nachfolgenden Spritzvorgang verwendet werden kann.

Demnach kann die Maschine 12 in einer kostensparenden Weise mit einer relativ hohen, ersten Geschwindigkeit v über das Feld 58 bewegt werden, die es nicht ermöglichen würde, ein nur anhand eines lokalen Sensors 38 erkanntes, unerwünschtes Lebewesen 56 zu besprühen, denn die Geschwindigkeit v kann größer als der in Vorwärtsrichtung gemessene Abstand x (vgl. Figur 2) zwischen den von den Sensoren 38 auf dem Feld 58 erfassten sensitiven Bereichen und den von den Ausgabeeinrichtungen 42 beaufschlagten Bereichen des Felds 58 geteilt durch eine Reaktionszeit Δt₂ gewählt werden, welche der Reaktionszeit der Bildverarbeitung der lokalen Sensoren plus der Reaktionszeit Δt entspricht. Erreicht die Maschine 12 hingegen ein unerwünschtes Lebewesen 56, wird die betroffene Ausgabeeinrichtung 42 vorsorglich aktiviert und die Aktivierung der Ausgabeeinrichtung 42 wird selbsttätig wieder aufgehoben, wenn der lokale Sensor 38 keine unerwünschten Lebewesen 56 an der in der Karte eingetragenen Stelle erkennt oder diese (nachdem ein betroffener Bereich des Felds 58 abgefahren wurde) nicht mehr erkennt.

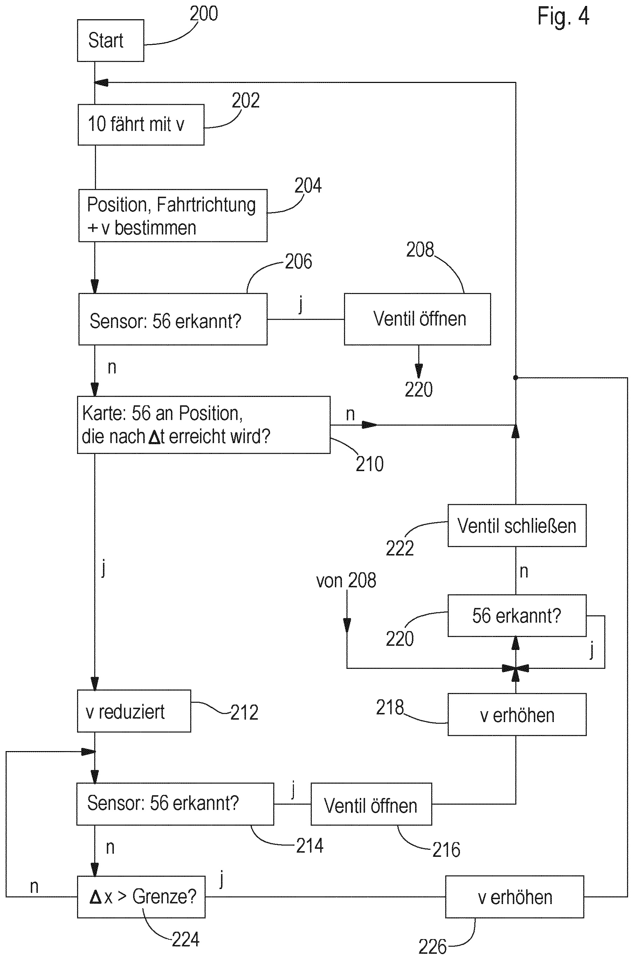

Die Figur 4 zeigt eine zweite Ausführungsform einer Vorgehensweise der Steuerung 36. Nach dem Start im Schritt 200 wird im Schritt 202 der Ackerschlepper 10 und somit auch die Maschine 12 mit einer ersten Vortriebsgeschwindigkeit v über das Feld 58 bewegt. Die erste Geschwindigkeit v kann durch die Steuerung 36 vorgegeben und über die Arbeitsfahrzeugsteuerung 34 an die Geschwindigkeitskontrolleinheit 50 kommandiert werden, oder sie wird vom Bediener über ein Pedal oder einen Fahrhebel vorgegeben. Im Schritt 204 wird anhand der Signale der Positionsbestimmungseinrichtung 40 die aktuelle Position des Ackerschleppers 10 ermittelt. Zudem wird dessen Vortriebsgeschwindigkeit v ermittelt, wozu man auf die Signale der Positionsbestimmungseinrichtung 40 oder eines mit einem der Räder 18, 20 zusammenwirkenden Sensors oder eines mit dem Erdboden zusammenwirkenden (Radar-) Sensors oder eines Trägheitsnavigationssystems zurückgreifen kann. Auch die Fahrtrichtung des Ackerschleppers 10 wird ermittelt, anhand eines Lenkwinkelsensors und/oder eines Trägheitsnavigationssystems und/oder anhand der Signale der Positionsbestimmungseinrichtung 40.

Im Schritt 206 werden die Signale der lokalen Sensoren 38 kontinuierlich durch die Steuerung 36 überwacht, da auch an Standorten auf dem Feld 58, die nicht in der Karte in der Speichereinrichtung 48 eingetragen sind, unerwünschte Lebewesen 56 vorhanden sein können. Sollte einer der Sensoren 38 ein derartiges Lebewesen 56 an einer unerwarteten Stelle auffinden, folgt der Schritt 208, in dem die Steuerung 36 veranlasst, dass alle Aktoren 46 mit einem (gemäß der Signale der lokalen Sensoren 38) im Wirkbereich der dem jeweiligen Aktor 46 zugehörigen Ausgabeeinrichtung 42 liegenden, unerwünschten Lebewesen 56 durch die Steuerung 36 angewiesen werden, mit dem Ausbringen von Spritzmittel zu beginnen. Auf den Schritt 208 folgt der weiter unten beschriebene Schritt 220.

Falls im Schritt 206 keine Lebewesen 56 erkannt wurden, folgt der Schritt 210, in welchem anhand der im Schritt 204 ermittelten Daten ermittelt wird, wo sich der Ackerschlepper 10 (bzw. die lokalen Sensoren 38 der Maschine 12) nach Ablauf einer Zeit Δt befinden werden. Hierzu wird auf den identischen Schritt 104 der Figur 3 verwiesen. Es wird demnach vorausschauend für die Standorte des Feldes 58, den die lokalen Sensoren 38 nach Ablauf der Reaktionszeit Δt erreicht haben werden, anhand der Karte in der Speichereinrichtung 48 überprüft, ob sich an einer dieser Standorte gemäß den in der Karte abgelegten Informationen unerwünschte Lebewesen 56 befinden. Um die kartierten Standorte der unerwünschten Lebewesen 56 kann noch eine Sicherheitszone gelegt werden, deren Radius einige Meter betragen kann. Sind am Standort keine unerwünschten Lebewesen zu erwarten, folgt wieder der Schritt 202, anderenfalls der Schritt 212.

Im Schritt 212 veranlasst die Steuerung 36 mittels einer über die Arbeitsfahrzeugsteuerung 34 an die Geschwindigkeitskontrolleinheit 50 übermittelten Anweisung, die Vortriebsgeschwindigkeit zu reduzieren. Der Ackerschlepper 10 fährt somit anschließend (nach Ablauf der Reaktionszeit der Geschwindigkeitskontrolleinheit 50) mit einer gegenüber der ersten Geschwindigkeit reduzierten, zweiten Geschwindigkeit.

Es folgt der Schritt 214, in dem die Steuerung 36 die Signale der lokalen Sensoren 38 dahingehend untersucht, ob unerwünschte Lebewesen 56 erfasst wurden. Der Schritt 108 findet, zeitlich betrachtet, genau dann oder kurz danach statt, nachdem die Zeit Δt abgelaufen ist, um sicherzustellen, dass die Sensoren 38 genau die Position des Feldes 58 erfassen, die in der Karte der Speichereinrichtung 48 eingetragen war. Die Steuerung 36 überprüft demnach anhand der Sensoren 38, ob unerwünschte Lebewesen 56 detektiert werden. Ist das der Fall, folgt der Schritt 216 und anderenfalls der Schritt 226, in dem die Geschwindigkeit v wieder vergrößert wird, gefolgt vom Schritt 202.

Im Schritt 224 wird überprüft, ob seit der Stelle, an der ein unerwünschtes Lebewesen 56 erwartet wurde, eine vorbestimmte Strecke Δx, die einige Meter betragen kann, zurückgelegt wurde. Ist das nicht der Fall, folgt der Schritt 214 und andernfalls der Schritt 202. Falls der Sensor 38 an der erwarteten Stelle keine unerwünschten Lebewesen 56 erkennt, erfolgt demnach kein Ausbringen von Spritzmittel.

Hat einer der Sensoren 38 im Schritt 214 jedoch ein unerwünschtes Lebewesen erkannt, folgt der Schritt 216, der dem Schritt 208 entspricht. Auf den Schritt 216 folgt der Schritt 218, in dem die Steuerung 36 mittels einer über die Arbeitsfahrzeugsteuerung 34 an die Geschwindigkeitskontrolleinheit 50 übermittelten Anweisung die Vortriebsgeschwindigkeit wieder auf die erste Vortriebsgeschwindigkeit verbringt. Es folgt der Schritt 220, in dem abgefragt wird, ob einer der Sensoren 38 noch ein unerwünschtes Lebewesen 56 erkennt. Ist das der Fall, folgt wieder der Schritt 220 und anderenfalls der Schritt 222, in dem die Aktoren 46 der geöffneten Ausgabeeinrichtungen 42 angewiesen werden, das Ausbringen von Spritzmittel zu unterbinden. Auf den Schritt 222 folgt wieder der Schritt 202.

Auch bei der Vorgehensweise nach Figur 4 können die mittels der lokalen Sensoren 38 im Schritt 206 und 214 erfassten, unerwünschten Lebewesen 56 georeferenziert in einer neuen Karte in der Speichereinrichtung 48 eingetragen werden, die bei einem nachfolgenden Spritzvorgang verwendet werden kann.

Bei der Ausführungsform nach Figur 4 kann die Maschine 12 an den erwartungsgemäß nicht mit unerwünschten Lebewesen 56 belegten Stellen des Feldes 58 in einer kostensparenden Weise mit einer relativ hohen, ersten Geschwindigkeit v über das Feld 58 bewegt werden, die es nicht ermöglichen würde, ein nur anhand eines lokalen Sensors 38 erkanntes, unerwünschtes Lebewesen 56 zu besprühen, denn die Geschwindigkeit v kann größer als der in Vorwärtsrichtung gemessene Abstand x (vgl. Figur 2) zwischen den von den Sensoren 38 auf dem Feld 58 erfassten sensitiven Bereichen und den von den Ausgabeeinrichtungen 42 beaufschlagten Bereichen des Felds 58 geteilt durch eine Reaktionszeit Δt₂ gewählt werden, welche der Reaktionszeit der Bildverarbeitung der lokalen Sensoren plus der Reaktionszeit Δt entspricht. Die Maschine 12 fährt, bevor sie ein unerwünschtes Lebewesen 56 erreicht, mit einer kleineren, zweiten Geschwindigkeit weiter, die insbesondere kleiner als der in Vorwärtsrichtung gemessene Abstand x geteilt durch die Reaktionszeit Δt₂ gewählt werden kann. Bei der zweiten Geschwindigkeit kann die Steuerung 36 noch rechtzeitig reagieren und einen Aktor 46 basierend auf dem Signal des lokalen Sensors 38 ansteuern. Diese Geschwindigkeitsverminderung wird selbsttätig wieder aufgehoben, wenn der lokale Sensor 38 ein unerwünschtes Lebewesen 56 erkennt oder nach Abfahren einer gewissen Strecke (Schritt 224) kein unerwünschtes Lebewesen 56 nachgewiesen wurde.

Die beiden Vorgehensweisen nach Figur 3 und 4 können kombiniert werden, indem beispielsweise im Schritt 106 der Figur 3 auch die Vortriebsgeschwindigkeit vermindert und im Schritt 110 sowie im Schritt 108 nach Erkennung eines unerwünschten Lebewesens 56 wieder angehoben wird. Man erreicht dadurch, dass die Maschine 12 in einem gewissen Bereich um Standorte erwarteter unerwünschter Lebewesen hinreichend langsam fahren kann, um die Nachteil der oben beschriebenen Reaktionszeiten zu vermeiden. Somit kann an Stellen des Feldes 58, an denen unerwünschte Lebewesen 56 kartiert worden sind, dort aber nicht angetroffen werden, noch für eine gewisse Strecke Δx langsamer gefahren werden, um in der Nähe des kartierten Standorts ggf. unerwünschte Lebewesen 56 finden können, die z.B. aufgrund einer ungenauen Karte oder geänderter Wachstumsbedingungen an einem benachbarten Standort aufzufinden sind.

## Patentansprüche

1. Verfahren zur Bekämpfung unerwünschter Lebewesen (56) auf einem Feld (58), mit folgenden Schritten:
Bereitstellen einer elektronischen Karte, in welcher erwartete Standorte unerwünschter Lebewesen (56) auf dem Feld (58) georeferenziert eingetragen sind;
Überfahren des Feldes (58) mit einer Maschine (12) zum Ausbringen eines Mittels zur Bekämpfung der unerwünschten Lebewesen (56), die einen Vorrat an dem Mittel, wenigstens eine steuerbare Ausgabeeinrichtung (42) zur Ausbringung des Mittels und einen lokalen Sensor (38) zum Erfassen unerwünschter Lebewesen (56) auf dem Feld (58) umfasst,
wobei die Karte zur vorausschauenden Ansteuerung einer Funktion der Maschine (12) genutzt wird, während der lokale Sensor (38) zur Ansteuerung der Ausgabeeinrichtung (42) dient,
die vorausschauend angesteuerte Funktion der Maschine (12) ein selbsttätiges Öffnen der Ausgabeeinrichtung (42) im Sinne einer Beaufschlagung eines in der Karte eingetragenen Standorts des unerwünschten Lebewesens (56) mit dem Mittel umfasst und der lokale Sensor (38) ein selbsttätiges Schließen der Ausgabeeinrichtung (42) in dem Falle bewirkt, dass der lokale Sensor (38) am in der Karte eingetragenen Standort kein unerwünschtes Lebewesen (56) erkennt,
und die vorausschauend angesteuerte Funktion der Maschine (12) ein selbsttätiges Vermindern der Vortriebsgeschwindigkeit der Maschine (12) im Sinne eines Erzielens einer verminderten Vortriebsgeschwindigkeit am in der Karte eingetragenen Standort des unerwünschten Lebewesens (56) umfasst und der lokale Sensor (38) zum dortigen Ansteuern der Ausgabeeinrichtung (42) dient,
**dadurch gekennzeichnet, dass** die Maschine (12) während des Befahrens von Bereichen des Feldes (58), an denen in der Karte keine unerwünschten Lebewesen (56) eingetragen sind, mit einer ersten Vortriebsgeschwindigkeit fährt, die größer als der Abstand (x) zwischen dem vom lokalen Sensor (38) sensierten Bereich und der von der Ausgabeeinrichtung (42) beaufschlagten Stelle des Feldes (58) geteilt durch die Summe der Reaktionszeiten des lokalen Sensors (38) und der Ausgabeeinrichtung (42) ist, und die verminderte Vortriebsgeschwindigkeit kleiner oder gleich dem erwähnten Abstand (x) geteilt durch die Summe der Reaktionszeiten des lokalen Sensors (38) und der Ausgabeeinrichtung (42) ist.

2. Verfahren nach Anspruch 1, mit dem Schritt des Beibehaltens des Öffnens der Ausgabeeinrichtung (42) und/oder des Erhöhens der Vortriebsgeschwindigkeit, solange der lokale Sensor (38) unerwünschte Lebewesen (56) detektiert.

3. Verfahren nach Anspruch 2, mit dem Schritt des Schließens der Ausgabeeinrichtung (42) falls der lokale Sensor (38) keine unerwünschte Lebewesen (56) mehr detektiert.

4. Verfahren nach einem der vorhergehenden Ansprüche, wobei die Karte mit dem lokalen Sensor (38) während einer zeitlich zurückliegenden Überfahrt der Maschine (12) über das Feld (58) erzeugt wird.

5. Verfahren nach einem der vorhergehenden Ansprüche, wobei die unerwünschten Lebewesen (56) Wildkräuter, Insekten oder Pilze sind und die Maschine (12) eine Feldspritze ist.

6. Verfahren nach einem der vorhergehenden Ansprüche, wobei der lokale Sensor (38) an einem an der Vorderseite der Maschine (12) oder eines sie ziehenden oder tragenden Fahrzeugs angebrachten Halter oder an einem die Ausgabeeinrichtung (42) halternden Querträger (44) befestigt ist.

7. Vorrichtung zur Bekämpfung unerwünschter Lebewesen (56) auf einem Feld (58), mit einer Steuerung (36), die mit einer elektronischen Karte, in welcher erwartete Standorte unerwünschter Lebewesen (56) auf dem Feld (58) georeferenziert eingetragen sind, mit einer steuerbaren Ausgabeeinrichtung (42) einer einen Vorrat an einem Mittel zur Bekämpfung der unerwünschten Lebewesen (56) aufweisenden Maschine (12) zur Ausbringung des Mittels und einem lokalen Sensor (38) zum Erfassen unerwünschter Lebewesen (56) auf dem Feld (58) verbunden ist, wobei die Steuerung (36) eingerichtet ist, die Karte zur vorausschauenden Ansteuerung einer Funktion der Maschine (12) zu verwenden und der lokale Sensor (38) zur Ansteuerung der Ausgabeeinrichtung (42) dient, wobei die vorausschauend angesteuerte Funktion der Maschine (12) ein selbsttätiges Öffnen der Ausgabeeinrichtung (42) im Sinne einer Beaufschlagung eines in der Karte eingetragenen Standorts des unerwünschten Lebewesens (56) mit dem Mittel umfasst und der lokale Sensor (38) ein selbsttätiges Schließen der Ausgabeeinrichtung (42) in dem Falle bewirkt, dass der lokale Sensor (38) am in der Karte eingetragenen Standort kein unerwünschtes Lebewesen (56) erkennt, und die vorausschauend angesteuerte Funktion der Maschine (12) ein selbsttätiges Vermindern der Vortriebsgeschwindigkeit der Maschine (12) im Sinne eines Erzielens einer verminderten Vortriebsgeschwindigkeit am in der Karte eingetragenen Standort des unerwünschten Lebewesens (56) umfasst und der lokale Sensor (38) zum dortigen Ansteuern der Ausgabeeinrichtung (42) dient, **dadurch gekennzeichnet, dass** die Maschine (12) während des Befahrens von Bereichen des Feldes (58), an denen in der Karte keine unerwünschten Lebewesen (56) eingetragen sind, mit einer ersten Vortriebsgeschwindigkeit fährt, die größer als der Abstand (x) zwischen dem vom lokalen Sensor (38) sensierten Bereich und der von der Ausgabeeinrichtung (42) beaufschlagten Stelle des Feldes (58) geteilt durch die Summe der Reaktionszeiten des lokalen Sensors (38) und der Ausgabeeinrichtung (42) ist, und die verminderte Vortriebsgeschwindigkeit kleiner oder gleich dem erwähnten Abstand (x) geteilt durch die Summe der Reaktionszeiten des lokalen Sensors (38) und der Ausgabeeinrichtung (42) ist.

## Claims

1. Method for controlling undesirable organisms (56) in a field (58), having the following steps of:
providing an electronic map in which expected locations of undesirable organisms (56) in the field (58) have been entered in a geo-referenced manner;
crossing the field (58) with a machine (12) for applying an agent for controlling the undesirable organisms (56), which machine comprises a supply of the agent, at least one controllable dispensing device (42) for applying the agent and a local sensor (38) for detecting undesirable organisms (56) in the field (58),
wherein the map is used to control a function of the machine (12) in an anticipatory manner, while the local sensor (38) is used to control the dispensing device (42),
the function of the machine (12) which is controlled in an anticipatory manner comprises automatically opening the dispensing device (42) for the purpose of applying the agent to a location of the undesirable organism (56) which is entered in the map, and the local sensor (38) causes automatic closing of the dispensing device (42) if the local sensor (38) does not detect an undesirable organism (56) at the location entered in the map,
and the function of the machine (12) which is controlled in an anticipatory manner comprises automatically reducing the advancing speed of the machine (12) for the purpose of achieving a reduced advancing speed at the location of the undesirable organism (56) entered in the map, and the local sensor (38) is used to control the dispensing device (42) there,
**characterized in that**, when travelling in regions of the field (58) at which no undesirable organisms (56) are entered in the map, the machine (12) moves at a first advancing speed which is greater than the distance (x) between the region sensed by the local sensor (38) and the point of the field (58) to which the dispensing device (42) applies the agent divided by the sum of the reaction times of the local sensor (38) and the dispensing device (42), and the reduced advancing speed is less than or equal to the distance (x) mentioned divided by the sum of the reaction times of the local sensor (38) and the dispensing device (42).

2. Method according to Claim 1, having the step of maintaining the opening of the dispensing device (42) and/or the increase in the advancing speed as long as the local sensor (38) detects undesirable organisms (56).

3. Method according to Claim 2, having the step of closing the dispensing device (42) if the local sensor (38) no longer detects any undesirable organisms (56).

4. Method according to one of the preceding claims, wherein the map is generated using the local sensor (38) while the machine (12) crossed the field (58) in the past.

5. Method according to one of the preceding claims, wherein the undesirable organisms (56) are wild herbs, insects or fungi, and the machine (12) is a field sprayer.

6. Method according to one of the preceding claims, wherein the local sensor (38) is fastened to a holder fitted to the front of the machine (12) or of a vehicle pulling or carrying the machine or is fastened to a crossmember (44) holding the dispensing device (42).

7. Apparatus for controlling undesirable organisms (56) in a field (58), having a controller (36) which is connected to an electronic map in which expected locations of undesirable organisms (56) in the field (58) are entered in a geo-referenced manner, a controllable dispensing device (42) of a machine (12) which has a supply of an agent for controlling the undesirable organisms (56) and is intended to apply the agent, and a local sensor (38) for detecting undesirable organisms (56) in the field (58), wherein the controller (36) is configured to use the map to control a function of the machine (12) in an anticipatory manner, and the local sensor (38) is used to control the dispensing device (42), wherein the function of the machine (12) which is controlled in an anticipatory manner comprises automatically opening the dispensing device (42) for the purpose of applying the agent to a location of the undesirable organism (56) entered in the map, and the local sensor (38) causes automatic closing of the dispensing device (42) if the local sensor (38) does not detect any undesirable organism (56) at the location entered in the map, and the function of the machine (12) which is controlled in an anticipatory manner comprises automatically reducing the advancing speed of the machine (12) for the purpose of achieving a reduced advancing speed at the location of the undesirable organism (56) entered in the map, and the local sensor (38) is used to control the dispensing device (42) there, **characterized in that**, while travelling in regions of the field (58) at which no undesirable organisms (56) are entered in the map, the machine (12) moves at a first advancing speed which is greater than the distance (x) between the region sensed by the local sensor (38) and the point of the field (58) to which the dispensing device (42) applies the agent divided by the sum of the reaction times of the local sensor (38) and the dispensing device (42), and the reduced advancing speed is less than or equal to the distance (x) mentioned divided by the sum of the reaction times of the local sensor (38) and the dispensing device (42).

## Revendications

1. Procédé de lutte contre les organismes indésirables (56) dans un champ (58), le procédé comprenant les étapes suivantes :
fournir une carte électronique dans laquelle des emplacements attendus d'organismes indésirables (56) dans le champ (58) sont reportés de manière géo-référencée ;
parcourir le champ (58) avec une machine (12) qui est destinée à épandre un agent de lutte contre les organismes indésirables (56) et qui comprend un réservoir d'agent, au moins un moyen dispensateur commandable (42) destiné à épandre l'agent et un capteur local (38) destiné à détecter les organismes indésirables (56) dans le champ (58),
la carte étant utilisée pour la commande prédictive d'une fonction de la machine (12), tandis que le capteur local (38) est utilisé pour commander le moyen dispensateur (42),
la fonction, commandée de manière prédictive, de la machine (12) comprenant l'ouverture automatique du moyen dispensateur (42) au sens d'épandre l'agent à un emplacement, reporté sur la carte, de l'organisme indésirable (56) et le capteur local (38) provoquant la fermeture automatique du moyen dispensateur (42) dans le cas où le capteur local (38) ne détecte aucun organisme indésirable (56) à l'emplacement reporté sur la carte,
et la fonction, commandée de manière prédictive, de la machine (12) comprenant la réduction automatique de la vitesse d'avance de la machine (12) au sens d'atteindre une vitesse d'avance réduite à l'emplacement, reporté sur la carte, de l'organisme indésirable (56) et le capteur local (38) servant à commander le moyen dispensateur (42) à cet endroit,
**caractérisé en ce que**, pendant qu'elle parcourt des zones du champ (58) dans lesquelles aucun organisme indésirable (56) n'est reporté sur la carte, la machine (12) se déplace à une première vitesse d'avance qui est supérieure à la distance (x), entre la zone détectée par le capteur local (38) et le point du champ (58) qui est soumis au moyen dispensateur (42), divisée par la somme des temps de réaction du capteur local (38) et du moyen dispensateur (42), et la vitesse d'avance réduite est inférieure ou égale à ladite distance (x) divisée par la somme des temps de réaction du capteur local (38) et du moyen dispensateur (42).

2. Procédé selon la revendication 1, comprenant l'étape de maintien de l'ouverture du moyen dispensateur (42) et/ou d'augmentation de la vitesse d'avance tant que le capteur local (38) détecte des organismes indésirables (56).

3. Procédé selon la revendication 2, comprenant l'étape de fermeture du moyen dispensateur (42) si le capteur local (38) ne détecte plus d'organismes indésirables (56).

4. Procédé selon l'une des revendications précédentes, la carte étant générée avec le capteur local (38) pendant que la machine (12) parcourait le champ (58).

5. Procédé selon l'une des revendications précédentes, les organismes indésirables (56) étant des mauvaises herbes sauvages, des insectes ou des champignons et la machine (12) étant un pulvérisateur agricole.

6. Procédé selon l'une des revendications précédentes, le capteur local (38) étant fixé à un support monté à l'avant de la machine (12) ou d'un véhicule tractant ou portant celui-ci, ou à une traverse (44) supportant le moyen dispensateur (42).

7. Dispositif de lutte contre les organismes indésirables (56) dans un champ (58), ledit dispositif comprenant une commande (36) qui est reliée à une carte électronique dans laquelle des emplacements attendus d'organismes indésirables (56) du champ (58) sont reportés de manière géo-référencée, à un moyen dispensateur commandable (42) d'une machine (12) qui comporte un réservoir d'agent de lutte contre les organismes indésirables (56) et qui est destinée à épandre l'agent, et à un capteur local (38) destiné à détecter les organismes indésirables (56) dans le champ (58), la commande (36) étant conçue pour utiliser la carte pour commander de manière prédictive une fonction de la machine (12) et le capteur local (38) étant utilisé pour commander le moyen dispensateur (42), la fonction, commandée de manière prédictive, de la machine (12) comprenant l'ouverture automatique du moyen dispensateur (42) au sens d'épandre l'agent à un emplacement, reporté sur la carte, de l'organisme indésirable (56) et le capteur local (38) provoquant la fermeture automatique du moyen dispensateur (42) dans le cas où le capteur local (38) ne détecte aucun organisme indésirable (56) à l'emplacement reporté sur la carte, et la fonction, commandée de manière prédictive, de la machine (12) comprenant la réduction automatique de la vitesse d'avance de la machine (12) au sens d'atteindre une vitesse d'avance réduite à l'emplacement, reporté sur la carte, de l'organisme indésirable (56) et le capteur local (38) servant à commander le moyen dispensateur (42) à cet endroit, **caractérisé en ce que**, pendant qu'elle parcourt des zones du champ (58) dans lesquelles aucun organisme indésirable (56) n'est reporté sur la carte, la machine (12) se déplace à une première vitesse d'avance qui est supérieure à la distance (x), entre la zone détectée par le capteur local (38) et le point du champ (58) qui est soumis au moyen dispensateur (42), divisée par la somme des temps de réaction du capteur local (38) et du moyen dispensateur (42), et la vitesse d'avance réduite est inférieure ou égale à ladite distance (x) divisée par la somme des temps de réaction du capteur local (38) et du moyen dispensateur (42).
